# EUROPEAN PATENT APPLICATION

(11) **EP 2 463 465 A2**
(43) Date of publication of application: **13.06.2012**
(21) Application number: 11192177.1
(22) Date of filing: 06.12.2011
(51) Int. Cl.: E05C 9/04, E05B 65/12, E05B 63/24, B60R 7/06

(54) **Opening and closing device of glovebox for automobile and glovebox assembly having the same**

(30) Priority: 08.12.2010 KR 20100124798
(71) Applicant: Korea Fuel-Tech Corporation, Anseong-si, Gyeonggi-do 456-811 (KR)
(72) Inventor: Oh, Won Suk, 138-170 Songpa-gu Seoul (KR); Kim, Ki Hong, 456-823 Gyeonggi-do (KR); Lee, Do Sun, 456-811 Gyeonggi-do (KR)
(74) Representative: Zimmermann, Tankred Klaus

(57) **Abstract**

Disclosed are an opening and closing device of a glovebox for an automobile and a glovebox assembly having the same, which is convenient to open and close the glove box, increases storage capacity of the glovebox, and improves freedom of design. The opening and closing device of the glovebox for the automobile may include: a knob unit provided in a glovebox housing of the automobile and used to open a glovebox door from the glovebox housing; and a locking unit provided in the glovebox door and locking and releasing the glovebox door with respect to the glovebox housing in connection with the knob unit. Here, the knob unit may include a push button installed at an edge of the glovebox housing and exposed to an outside; a knob rod extended from the push button toward an inside of the glovebox housing; and an operation rod connecting with the knob rod to slide via an inclined surface and transmitting operation force to the locking unit through the slide.

## Description

### CROSS-REFERENCE TO RELATED APPLICATIONS

This application claims the benefit of priority of Korean Patent Application No. 10-2010-0124798 filed on December 8, 2010, all of which are incorporated by reference in their entirety herein.

### BACKGROUND OF THE INVENTION

### Field of the invention

The present invention relates to a glovebox for an automobile, provided in an instrument panel of the automobile to store and keep goods.

### Related Art

In general, a glovebox refers to a storage box for an automobile, which installed in a front instrument panel inside an automobile corresponding to a passenger seat and pivots on a hinge to be opened and closed for storing and keeping goods.

The glovebox includes an opening and closing device to be opened as a locking unit is released by operating a knob. With steady technical development, such an opening and closing device has been proposed in many ways such as convenient handling, easy installation, cost reduction based on simple mechanism, etc.

Conventionally, the opening and closing device has been provided in such a manner that the knob is placed in the front of a glovebox door pivoting to be opened and closed as being hinge-coupled to a glovebox housing installed in the instrument panel of the automobile.

Like this, the conventional opening and closing device for the glovebox is placed on the glovebox door and it is thus inconvenient for a user to open and close the glovebox since s/he has to pull the knob with a hook hand.

Also, the opening and closing device needs an installation space on the glovebox door, thereby lowering storage capacity. Further, when the glovebox door is damaged, both the glovebox door and the opening and closing device have to be replaced in a lump, thereby increasing repairing cost.

Further, the installation space occupied with the opening and closing device may limit freedom of designing the glovebox, and it is thus impossible to maintain a tidy outer appearance.

### SUMMARY OF THE INVENTION

Accordingly, the present invention is conceived to solve the forgoing problems, and an aspect of the present invention is to provide an opening and closing device of a glovebox for an automobile and a glovebox assembly having the same, which can provide convenience in opening and closing the glovebox, increase the storage capacity of the glovebox and improve freedom of design.

Technical aspects of the present invention are not limited to the foregoing technical aspect, and other technical aspects not mentioned above will be clearly understood by those skilled in the art from the following descriptions.

The foregoing aspects may be achieved by providing an opening and closing device of a glovebox for an automobile, the opening and closing device comprising: a knob unit provided in a glovebox housing of the automobile and used to open a glovebox door from the glovebox housing; and a locking unit provided in the glovebox door and locking and releasing the glovebox door with respect to the glovebox housing in connection with the knob unit.

The knob unit may comprise a push button installed at an edge of the glovebox housing and exposed to an outside; a knob rod extended from the push button toward an inside of the glovebox housing; and an operation rod connecting with the knob rod to slide via an inclined surface and transmitting operation force to the locking unit through the slide.

The knob rod and the operation rod may be arranged to move in directions intersecting with each other when the push button is pushed.

The knob rod may comprise an inclined part inclined at a predetermined angle to a pushing direction of the push button, and the operation rod may comprise an inclined groove, to which the inclined part is correspondingly fitted, in a part where the operation rod connects with the knob rod.

The knob unit may further comprise a knob bracket provided at an inner edge of the glovebox housing and supporting the knob rod and the operation rod.

The knob bracket comprises a first guide groove which receives and guides the knob road to slide in a pushing direction of the push button; and a second guide groove which intersects with the first guide groove, and receives and guides the operation rod to slid in a direction transverse to a sliding direction of the knob rod.

The knob rod may comprise a first end coupled to the push button, and a second end elastically supported by an elastic member inserted in the first guide groove in a direction opposed to the pushing direction of the push button.

The knob unit may further comprise a knob cover coupled to the knob bracket to cover an opening of the first and second guide grooves so as to prevent the knob rod, the operation rod and the elastic member from going out of the knob bracket.

The locking unit may comprise a first locking rod which is provided at one side of the glovebox door and locks and releases one side of the glovebox door with respect to the glovebox housing while moving in connection with operation of the operation rod; and a second locking rod which is provided at the other side of the glovebox door and locks and releases the other side of the glovebox door with respect to the glovebox housing while moving in a direction reverse to the moving direction of the first locking rod in connection with the first locking rod.

Another aspect may be achieved by providing a glovebox assembly comprising: a glovebox housing provided in an instrument panel inside an automobile; a glovebox door hinged-coupled to the glovebox housing and pivoting to be opened and closed; a knob unit provided in the glovebox housing and used to open the glovebox door from the glovebox housing; and a locking unit provided in the glovebox door and locking and releasing the glovebox door with respect to the glovebox housing in connection with the knob unit.

As described above, a push-button type knob is applied to an opening and closing device for a glovebox, and it is thus convenient to open and close the glovebox.

Also, the knob is installed in not a glovebox door but a glovebox housing, thereby increasing storage capacity of the glovebox, improving freedom of design, and making an tidy outer appearance.

Further, the Technical effects of the present invention are not limited to the foregoing technical effect, and other technical effects not mentioned above will be clearly understood by those skilled in the art from the following descriptions.

Details of other exemplary embodiments are involved in the detailed descriptions and drawings.

### BRIEF DESCRIPTION OF THE DRAWINGS

FIG. 1 is a perspective view schematically showing a glovebox assembly with an opening and closing device of a glovebox for an automobile according to an exemplary embodiment of the present invention,
FIG. 2 is a front view of a glovebox assembly for an automobile according to an exemplary embodiment of the present invention,
FIG. 3 is a perspective view showing a knob unit of an opening and closing device of a glovebox for an automobile device according to an exemplary embodiment of the present invention,
FIG. 4 is an exploded perspective view of FIG. 3,
FIGs. 5 and 6 are views for explaining operations of a knob unit of an opening and closing device of a glovebox for an automobile device according to an exemplary embodiment of the present invention, and
FIGs. 7 and 8 are views showing a locking unit of an opening and closing device of a glovebox for an automobile device according to an exemplary embodiment of the present invention,

### DESCRIPTION OF EXEMPLARY EMBODIMENTS

The advantages and features of the present invention, and methods for achieving the same will become apparent with reference to the following exemplary embodiments in conjunction with the accompanying drawings. However, the present invention is not limited to the exemplary embodiments disclosed below but may be achieved in various forms. The present exemplary embodiments are provided only for completing the disclosure of the present invention, and allowing a person having an ordinary skill in the art to completely understand the scope of the present invention, and are defined by the appended claims. Throughout the specification, like numerals refer to like elements.

Prior to description, an opening and closing device to be described later is applied to a glovebox assembly for an automobile, but not limited thereto. Alternatively, the opening and closing device may be applied to any push-button type structure as well as the glovebox for the automobile.

Below, an opening and closing device of a glovebox for an automobile and a glovebox assembly having the same according to exemplary embodiments of the present invention will be described with reference to the accompanying drawings. For reference, detailed description of the known functions or structures of the present invention will be omitted if it obscures the subject matter of the present invention.

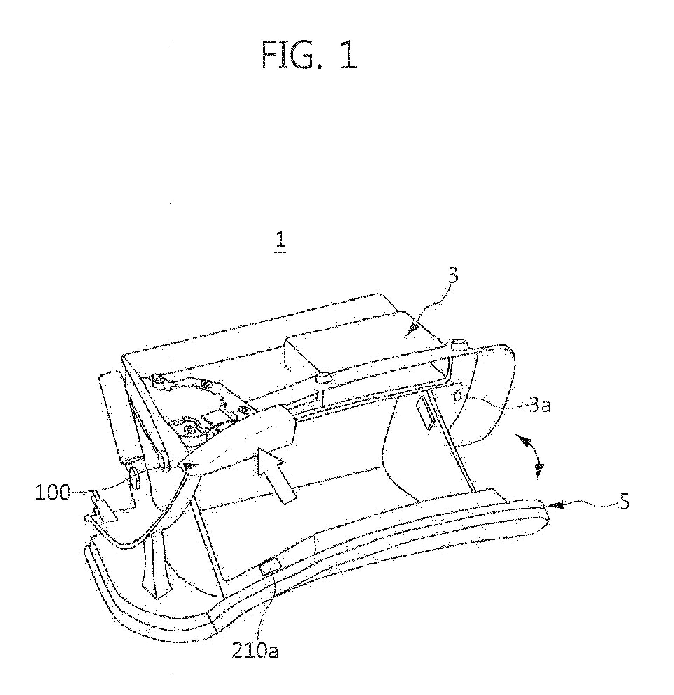

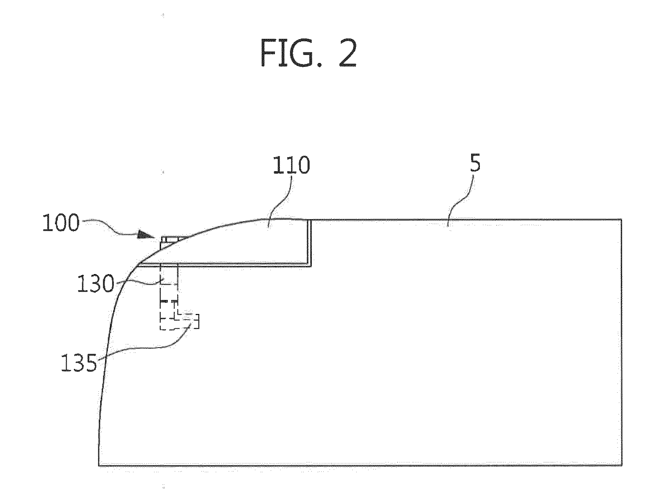

FIGs. 1 and 2 are a perspective view and a front view schematically showing a glovebox assembly for an automobile according to an exemplary embodiment of the present invention.

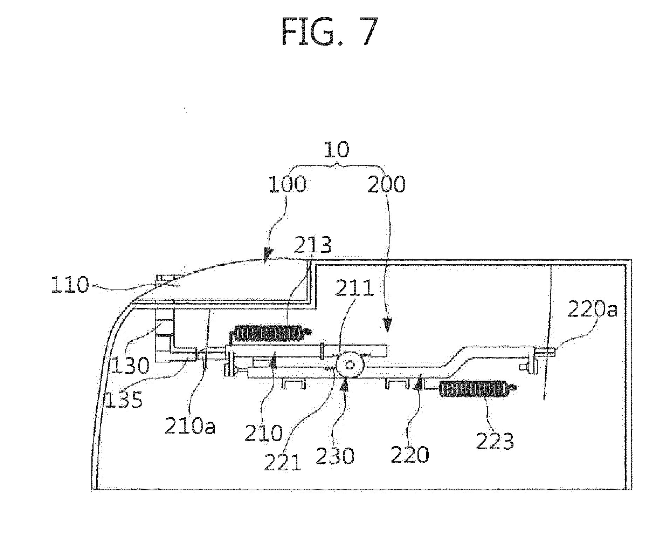

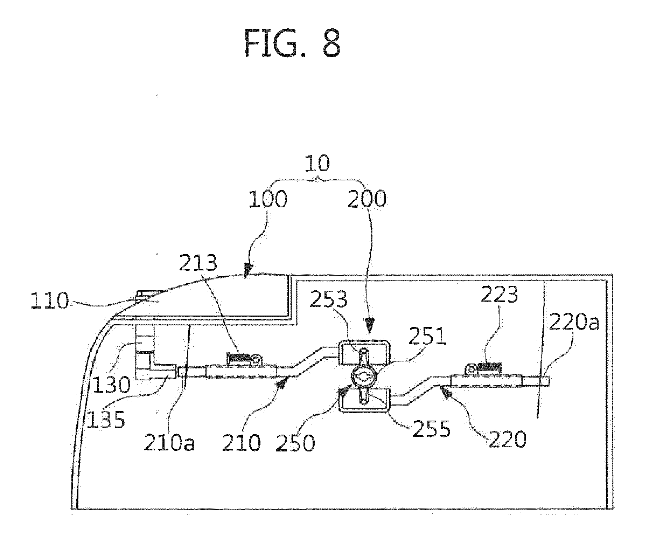

As shown in FIGs. 1 and 2, a glovebox assembly 1 for an automobile according to an exemplary embodiment of the present invention may include a glovebox housing 3, a glovebox door 5, and a glovebox opening and closing device 10 (see FIGs. 7 and 8).

The glovebox housing 3 is immovably installed in a front instrument panel (not shown) inside an automobile corresponding to a passenger seat.

The glovebox door 5 is hinge-coupled to the glovebox housing 3 and pivots to be opened and closed.

The glovebox opening and closing device 10 is of a button-press type and serves to open and close the glovebox door 5 with respect to the glovebox housing 3.

The glovebox opening and closing device 10 includes a knob unit 100 provided in the glovebox housing 3 and opening the glovebox door 5 from the glovebox housing 3, and a locking unit 200 provided in the glovebox door 5 and locking and releasing the glovebox door 5 to and from the glovebox housing 3 in connection with the knob unit 100,

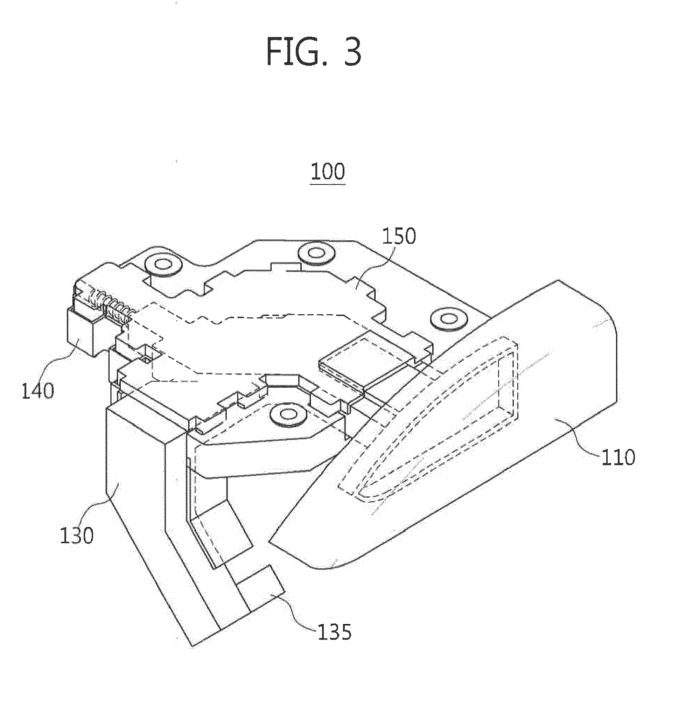

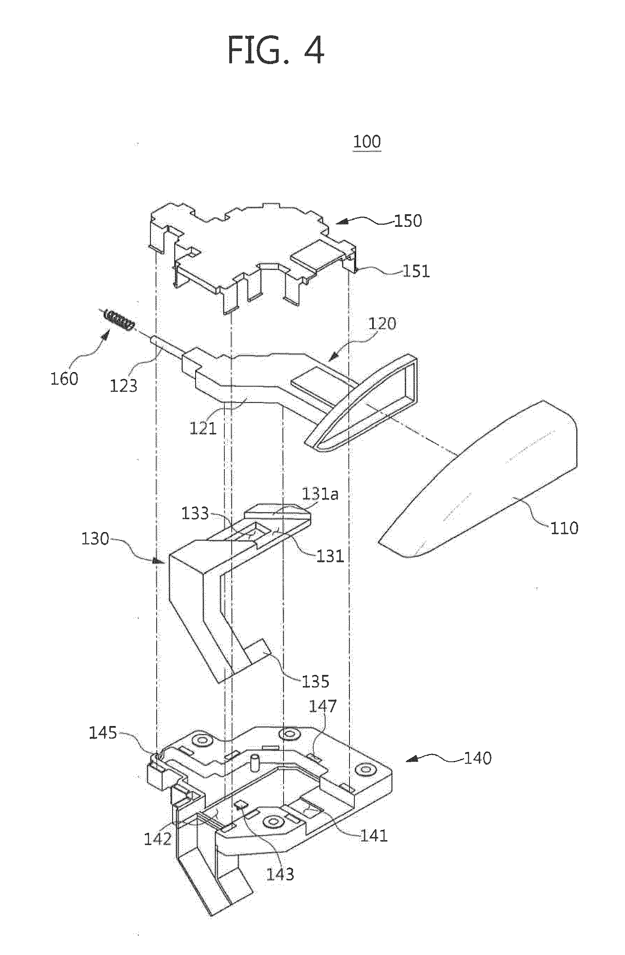

FIG. 3 is a perspective view showing a knob unit of an opening and closing device of a glovebox for an automobile device according to an exemplary embodiment of the present invention, and FIG. 4 is an exploded perspective view of FIG. 3.

As shown in FIGs. 3 and 4, the knob unit 100 may include a knob 110, a knob rod 120, an operation rod 130, a knob bracket 140, and a knob cover 150.

The knob 110 is handled by a user and determines whether to open and close the glovebox. The knob 110 is adjacent to the glovebox door 5 and exposed to the outside at an edge of the glovebox housing 3.

The knob 110 refers to a push button (to be explained with a reference numeral of 110) that operates when pushed. A knob guide (not shown) having a predetermined size is formed to position the push button 110 to be exposed outside of the glovebox housing 3, and allows the push button 110 to slide. At this time, the knob guide may be injection-molded integrally with the glovebox housing 3 when the glovebox housing 3 is manufactured, or separately from the glovebox housing 3.

The knob rod 120 is extended in an inward direction of the glovebox housing 3. The knob rod 120 has a first end (front end) fastened to the push button 110 by a screw (not shown) or the like, and a second end (rear end) elastically supported by an elastic member 160, for example a restoring spring 160, inserted in a first guide groove 141 of the knob bracket 140 to be described later, in a direction opposed to a pushing direction of the push button 110. Accordingly, when the push button 110 is pushed, the knob rod 120 presses the restoring spring 160 while moving forward in a progress direction of the push button 110. On the other hand, when the push button 110 is released, the knob rod 120 returns to its original position while moving backward by the elasticity of the compressed restoring spring 160. Here, the second end of the knob rod 120 is provided with a projection pin 123 to which the restoring spring 160 is stably fitted, and one side of the knob bracket 140 opposite to the second end of the knob rod 120 is formed with a through hole 145 so that the projection pin 123 of the knob rod 120 can pass through the through hole 145 when the knob rod 120 moves forward.

The knob rod 120 includes an inclined part 121 inclined at a predetermined angle, for example at an angle of 45degrees to the pushing direction of the push button 110, in a part intersecting with the operation rod 130 to be described later, for example, in an approximately middle part between the first and second ends of the knob rod 120.

The operation rod 130 connects with the knob rod 120 to slide via an inclined surface 131a. The operation rod 130 includes an operation projection 135 on the bottom thereof, which protrudes facing a first locking rod 210 of the locking unit 200 to be described later and transmits an operation force to the first locking rod 210 in connection with the slide of the operation rod 130.

The operation rod 130 is arranged to move in a direction intersecting with the knob rod 120 when the push button 110 is pushed. For example, the operation rod 130 is arranged to slide leftward and rightward perpendicularly to the forward and backward slide of the knob rod 120. To this end, the operation rod 130 includes an inclined groove 131, to which the inclined part 121 of the knob rod 120 is correspondingly fitted, on the top surface where the operation rod 130 connects and intersects with the knob road 120, so that the operation rod 130 can slide leftward and rightward perpendicularly to the forward and backward slide of the knob rod 120 via the inclined surface 131 a.

Also, the operation rod 130 is formed with a guide coupling groove 133 within the inclined groove 131 in a direction of a second guide groove 142 to be described later, so that a guide coupling projection 143 of the second guide groove 142 can be fitted to the guide coupling groove 133. Thus, when the operation rod 130 slides along the second guide groove 142, the operation rod 130 can be prevented from going out of the second guide groove 142.

The knob bracket 140 is provided corresponding to the push button 110 inside the edge of the glovebox housing 3, and supports the knob rod 120 and the operation rod 130.

The knob bracket 140 includes a first guide groove 141 receiving and guiding the knob rod 120 to slide in the pushing direction of the push button 110, and the second guide groove 142 perpendicularly intersecting with the first guide groove 141 and receiving and guiding the operation rod 130 to slide in a direction transverse to the forward and backward movement of the knob rod 120, i.e., leftward and rightward.

The knob cover 150 is coupled to the knob bracket 140 and covers the top opening of the first guide groove 141 and the second guide groove 142 so as to prevent the knob rod 120, the operation rod 130 and the elastic member 160 from going out of the knob bracket 140.

In this exemplary embodiment, the knob cover 150 includes a plurality of fitting projections 151 at the edge thereof, and the knob bracket 140 includes a plurality of fitting groove 147 to which the fitting projections 151 are fitted, so that the knob cover 150 can be fitted to the knob bracket 140. However, without any limitation, various known coupling structures may be applied thereto. For example, the knob bracket 140 and the knob cover 150 may be coupled using a bolt (not shown).

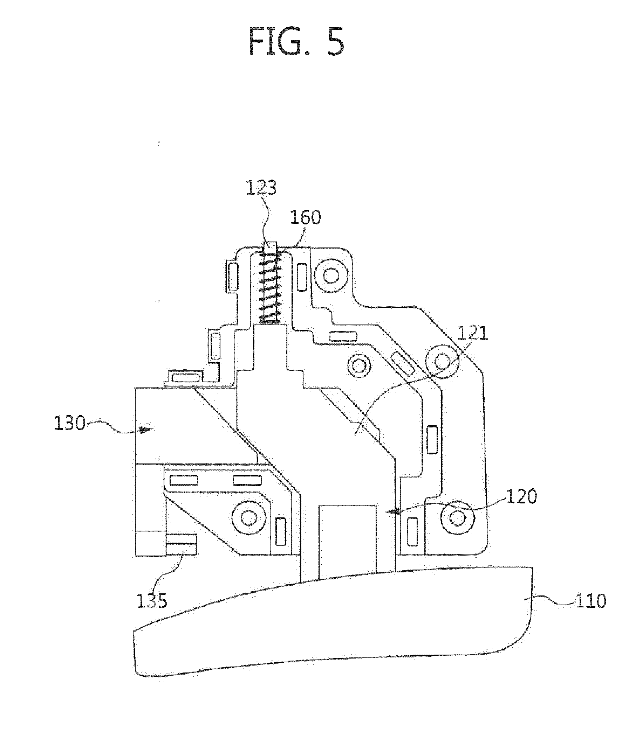

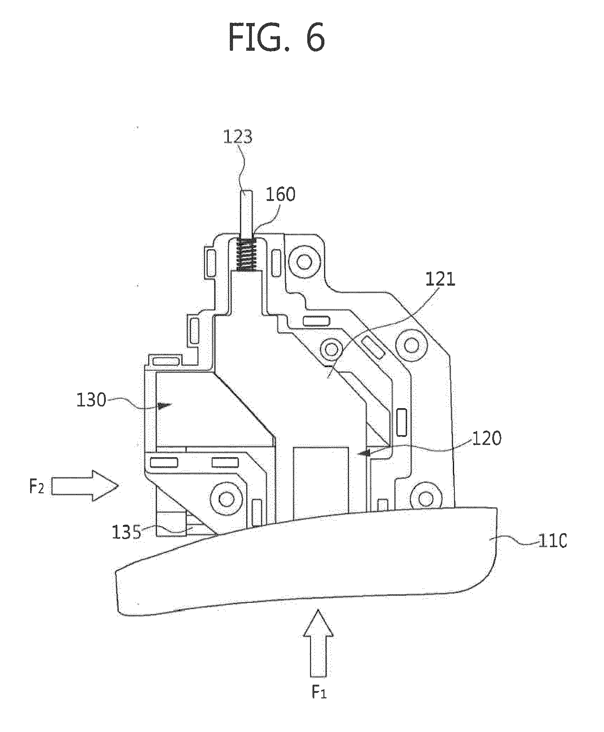

FIGs. 5 and 6 are views for explaining operations of a knob unit of an opening and closing device of a glovebox for an automobile device according to an exemplary embodiment of the present invention.

First, as shown in FIG. 5, in an initial state where the push button 110 is not pushed, the knob rod 120 is elastically supported by the elastic member 160 and urged forward, and the inclined part 121 of the knob rod 120 pushes the operation rod 130 leftward via the inclined surface 131a with respect to the inclined groove 131 of the operation rod 130. At this time, the operation projection 135 of the operation rod 130 is moved left in connection with the slide of the operation rod 130 and thus transmits no operation force to the locking unit 200 to be described later. Accordingly, the glovebox door 5 is closed with regard to the glovebox housing 3.

Next, as shown in FIG. 6, if a user pushes the push button 110 (refer to action of force F1), the knob rod 120 compresses the elastic member 160 while moving in the pushing direction of the push button 110, and the inclined part 121 of the knob rod 120 pushes the operation rod 130 rightward via the inclined surface 131a with respect to the inclined groove 131 of the operation rod 130 (refer to action of force F2). At this time, the operation projection 135 of the operation rod 130 is moved right in connection with the slide of the operation rod 130 and thus transmits the operation force to the locking unit 200 to be described later. Accordingly, the glovebox door 5 is opened with regard to the glovebox housing 3.

FIGs. 7 and 8 are views showing a locking unit of an opening and closing device of a glovebox for an automobile device according to an exemplary embodiment of the present invention.

Here, the locking unit 200 of the glovebox opening and closing device 10 can be understood with reference to known technology, and therefore exemplary embodiments of the locking unit 200 to which a pinion gear 230 and a rotary member 250 are applied will be described in brief with reference to FIGs. 7 and 8.

FIG. 7 shows an exemplary embodiment of a locking unit using a pinion gear. As shown in FIG. 7, the locking unit 200 may be configured with a first locking rod 210, a second locking rod 220, and a pinion gear 230.

The first locking rod 210 is provided at one side (left side) of the glovebox door 5 and horizontally movable. A left end locking projection 210a of the first locking rod 210 is fitted and locked to a locking hole (not shown) formed in a left inner wall of the glovebox housing 3. The first locking rod 210 serves to lock or release the left side of the glovebox door 5 with respect to the glovebox housing 3 while horizontally moving in connection with operation of the operation rod 130 of the knob unit 100. The first locking rod 210 is formed with a rack gear 211 to be engaged with one side of the pinion gear 230 to be described later. Also, the first locking rod 210 is coupled with an elastic member (spring) 213 that provides the restoring force leftward.

The second locking rod 220 is provided at the other side (right side) of the glovebox door 5 and horizontally movable. The second locking rod 220 is fitted and locked to a locking hole 3a formed in a right inner wall of the glovebox housing 3 while moving horizontally in connection with the first locking rod 210. The second locking rod 220 serves to lock or release the right side of the glovebox door 5 with respect to the glovebox housing 3 while moving in a direction reverse to the moving direction of the first locking rod 210 via the pinion gear 230. The second locking rod 220 is formed with a rack gear 221 to be engaged with the other side of the pinion gear 230. Also, the second locking rod 220 is coupled with an elastic member (spring) 223 that provides the restoring force rightward.

The pinion gear 230 is placed in between the first locking rod 210 and the second locking rod 220 so as to be engaged with both the rack gear 211 of the first locking rod 210 and the rack gear 221 of the second locking rod 220, and the first locking rod 210 and the second locking rod 220 are moved in directions reverse to each other as the pinion gear 230 rotates.

When the push button 110 is pushed, the first locking rod 210 horizontally moves rightward in connection with the operation rod 130, and releases the left side of the glovebox door 5 from the glovebox housing 3. At the same time, the second locking rod 220 horizontally moves leftward via the pinion gear 230, and releases the right side of the glovebox door 5 from the glovebox housing 3. Thus, the glovebox door 5 is opened from the glovebox housing 3 by the releasing operation of the locking unit 200.

FIG. 8 shows another exemplary embodiment of a locking unit using a rotary member. As shown in FIG. 8, the locking unit 200 may be configured with a first locking rod 210, a second locking rod 220, and a rotary member 250. The locking unit 200 of FIG. 8 is the same as that of FIG. 7 except the rotary member 250. Therefore, repetitive descriptions thereof will be avoided as necessary.

The rotary member 250 is placed in between the first locking rod 210 and the second locking rod 220, and includes a center unit 251 rotatably coupled to an inner wall of the glovebox door 5, and a pair of link units 253 and 255 formed at opposite sides of the center unit 251 and hinge-coupled to the first locking rod 210 and the second locking rod 220, respectively.

The configurations of the locking units shown in FIGs. 7 and 8 are the same as the conventional configurations for locking and releasing the glovebox door with respect to the glovebox housing, and thus repetitive descriptions thereof will be avoided.

Accordingly, the push-button type knob is applied to the glovebox opening and closing device, and it is thus convenient to open and close the glove box. Also, the knob is installed in not the glovebox door but the glovebox housing, thereby increasing storage capacity of the glovebox, improving freedom of design, and making an tidy outer appearance.

The exemplary embodiments should be considered in descriptive sense only and not for purposes of limitation. Therefore, the scope of the invention is defined not by the detailed description of the invention but by the appended claims, and it will be understood by a person having ordinary skill in the art that various changes in form and details may be made therein without departing from the spirit and scope of the invention as defined by the appended claims.

## Claims

1. An opening and closing device of a glovebox for an automobile, the opening and closing device comprising:
a knob unit provided in a glovebox housing of the automobile and used to open a glovebox door from the glovebox housing; and
a locking unit provided in the glovebox door and locking and releasing the glovebox door with respect to the glovebox housing in connection with the knob unit.

2. The opening and closing device according to claim 1, wherein the knob unit comprises
a push button installed at an edge of the glovebox housing and exposed to an outside;
a knob rod extended from the push button toward an inside of the glovebox housing; and
an operation rod connecting with the knob rod to slide via an inclined surface and transmitting operation force to the locking unit through the slide.

3. The opening and closing device according to claim 2, wherein the knob rod and the operation rod are arranged to move in directions intersecting with each other when the push button is pushed.

4. The opening and closing device according to claim 2, wherein the knob rod comprises an inclined part inclined at a predetermined angle to a pushing direction of the push button, and the operation rod comprises an inclined groove, to which the inclined part is correspondingly fitted, in a part where the operation rod connects with the knob rod.

5. The opening and closing device according to claim 2, wherein the knob unit further comprises a knob bracket provided at an inner edge of the glovebox housing and supporting the knob rod and the operation rod.

6. The opening and closing device according to claim 5, wherein the knob bracket comprises
a first guide groove which receives and guides the knob road to slide in a pushing direction of the push button; and
a second guide groove which intersects with the first guide groove, and receives and guides the operation rod to slid in a direction transverse to a sliding direction of the knob rod.

7. The opening and closing device according to claim 6, wherein the knob rod comprises a first end coupled to the push button, and a second end elastically supported by an elastic member inserted in the first guide groove in a direction opposed to the pushing direction of the push button.

8. The opening and closing device according to claim 7, wherein the knob unit further comprises a knob cover coupled to the knob bracket to cover an opening of the first and second guide grooves so as to prevent the knob rod, the operation rod and the elastic member from going out of the knob bracket.

9. The opening and closing device according to claim 2, wherein the locking unit comprises
a first locking rod which is provided at one side of the glovebox door and locks and releases one side of the glovebox door with respect to the glovebox housing while moving in connection with operation of the operation rod; and
a second locking rod which is provided at the other side of the glovebox door and locks and releases the other side of the glovebox door with respect to the glovebox housing while moving in a direction reverse to the moving direction of the first locking rod in connection with the first locking rod.

10. A glovebox assembly comprising:
a glovebox housing provided in an instrument panel inside an automobile;
a glovebox door hinged-coupled to the glovebox housing and pivoting to be opened and closed;
a knob unit provided in the glovebox housing and used to open the glovebox door from the glovebox housing; and
a locking unit provided in the glovebox door and locking and releasing the glovebox door with respect to the glovebox housing in connection with the knob unit.

11. The glovebox assembly according to claim 10, wherein the knob unit comprises
a push button installed at an edge of the glovebox housing and exposed to an outside;
a knob rod extended from the push button toward an inside of the glovebox housing; and
an operation rod connecting with the knob rod to slide via an inclined surface and transmitting operation force to the locking unit through the slide.
